# EUROPEAN PATENT APPLICATION

(11) **EP 3 771 936 A1**
(43) Date of publication of application: **03.02.2021**
(21) Application number: 20187191.0
(22) Date of filing: 22.07.2020
(51) Int. Cl.: G02B 19/00, B41J 2/45, G02B 13/22, B41J 2/455, G02B 5/00

(54) **LASER UNIT, LASER MARKER, AND LASER PRINTING SYSTEM**

(30) Priority: 30.07.2019 JP 2019139880
(71) Applicant: Ricoh Company, Ltd., Tokyo 143-8555 (JP)
(72) Inventor: SASAKI, Takashi, Tokyo, 143-8555 (JP); ARAI, Nobuyuki, Tokyo, 143-8555 (JP)
(74) Representative: SSM Sandmair

(57) **Abstract**

Example embodiments include a laser unit including: a multibeam laser light source (0) including a plurality of micro laser light emitters arrayed in a one-dimensional array or a two-dimensional manner; and an imaging lens system (43) configured to form real images of the plurality of micro laser light emitters arrayed of the multibeam laser light source (0), the imaging lens system (43) being telecentric on an object side and an image side. The image lens system (43) includes: a front lens group disposed on the object side; a rear lens group disposed on the image side; and a beam diameter limiter that is disposed at a position onto which all laser beams from the multibeam laser light source (0) are focused by the front lens group. The beam diameter has a passage portion allowing passage of part of each laser beam including a chief ray, and limits a diameter of a passing laser beam passing through the passage portion so as to increase a margin of depth for imaging with the passing laser beam.

## Description

### BACKGROUND

### Technical Field

The present invention relates to a laser unit, a laser marker, and a laser printing system.

### Description of the Related Art

There is a widely known background art for drawing, printing, or processing using a laser beam.

Laser processing is known as the one that uses the thermal energy of a laser beam, and "laser marker" is known in which a laser beam is focused onto an object such as a thermal sheet to develop the color of the object due to an increase in the temperature thereof so as to execute drawing or printing.

Hereinafter, "drawing, processing, and printing" are collectively and simply referred to as "printing", and the medium (e.g., thermal sheet) on which printing is executed is referred to as "print medium".

The printing method using a plurality of laser beams is called "multibeam method."

As printing using a laser beam is executed with an optical-spot shaped laser beam (hereinafter referred to as "optical spot"), the printing accuracy (resolution) is highest at the imaging position (focal position) of the laser beam having the smallest diameter of the optical spot (hereinafter referred to as "spot diameter").

The cross-section diameter of a laser beam increases in the vicinity of the focal position of the laser beam in the traveling direction of the laser beam. Therefore, when the surface on which printing is performed (hereinafter referred to as "print surface") is misaligned with respect to the focal position of the optical spot, the spot diameter on the print surface increases, which results in a decrease in the printing accuracy.

The "range of misalignment between the print surface and the imaging position of the laser beam", which is "the allowable range" of the printing accuracy, is what is called "margin of depth". A larger margin of depth refers to a larger margin in the positional relationship between the imaging position of a laser beam and the print surface, and the spot diameter slightly changes within the margin of depth.

The method disclosed in JP-2008-70792-A is known as the method for increasing the margin of depth with respect to the optical spot of a laser beam by using an optical element. The disclosed method enables an effective increase in the margin of depth for single-beam printing. However, as the used optical element is symmetric with respect to the optical axis, it is difficult to apply this method to a multibeam printing that also uses an object light outside the optical axis.

With regard to the multibeam printing, when a laser beam has a different margin of depth, the resolution of printing is decreased due to the laser beam of which the print surface falls outside the margin of depth, which results in a disadvantage such as "unevenness in the print density". Therefore, the print surface is desirably positioned within the minimum margin of depth among the margins of depth of the laser beams, and the high-accuracy print surface position is desired.

The present invention has an object to provide a new laser unit that may reduce the demand for the positional accuracy of the print surface for multibeam printing.

### SUMMARY

Example embodiments include a laser unit including: a multibeam laser light source including a plurality of micro laser light emitters arrayed in a one-dimensional array or a two-dimensional manner; and an imaging lens system to form real images of the plurality of micro laser light emitters arrayed of the multibeam laser light source, the imaging lens system being telecentric on an object side and an image side. The image lens system includes: a front lens group disposed on the object side; a rear lens group disposed on the image side; and a beam diameter limiter that is disposed at a position onto which all laser beams from the multibeam laser light source are focused by the front lens group. The beam diameter has a passage portion allowing passage of part of each laser beam including a chief ray, and limits a diameter of a passing laser beam passing through the passage portion so as to increase a margin of depth for imaging with the passing laser beam.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIGS. 1A to 1D are diagrams illustrating the principle of a laser unit according to an embodiment of the present invention;
FIG. 2 is a diagram illustrating an example of a beam diameter limiter according to an embodiment of the present invention;
FIG. 3 is a diagram illustrating a usage example of the beam diameter limiter illustrated in FIG. 2;
FIGS. 4A and 4B are diagrams illustrating another example of a beam diameter limiter according to an embodiment of the present invention;
FIGS. 5A and 5B are diagrams illustrating another example of a beam diameter limiter according to an embodiment of the present invention;
FIG. 6 is a diagram illustrating a laser unit according to an embodiment of the present invention;
FIG. 7 is a diagram illustrating a laser marker according to a first embodiment of the present invention; and
FIG. 8 is a diagram illustrating a laser printing system according to the first embodiment.

The accompanying drawings are intended to depict embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

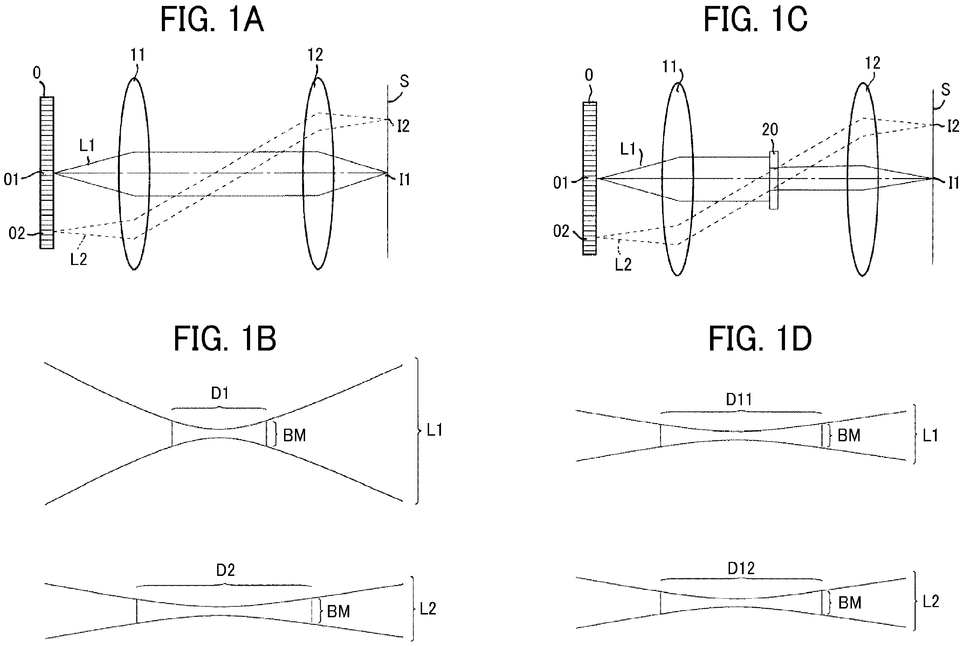

Referring to FIGS. 1A to 1D, the principle of a laser unit according to an embodiment of the present invention is described.

FIGS. 1A and 1C illustrate a multibeam laser light source 0 and an imaging lens system including a front lens group 11 and a rear lens group 12. A print surface S is the surface of the above-described print medium on which printing is performed, and the proper position thereof in design is illustrated in FIGS. 1A and 1C.

The multibeam laser light source 0 has "the structure in which micro laser light emitters have a one-dimensional or two-dimensional array". For the details in the following description, it is assumed that the micro exit end faces of optical fibers, which are coupled to laser diodes, are arrayed as "laser light emitters" in one dimension in the vertical direction of FIGS. 1A and 1C.

FIGS. 1A and 1C illustrate the "portion where the exit end faces of the optical fibers are arrayed as laser light emitters in one dimension" in the multibeam laser light source 0. The combination surface of one-dimensionally arrayed micro exit end faces is referred to as "exit surface" and also as "exit surface 0" below.

Each of the front lens group 11 and the rear lens group 12, which form the imaging lens system, is illustrated as a single lens in a simple way. The front lens group 11 and the rear lens group 12 have the common optical axis. The optical axis is "perpendicular to the exit surface" of the multibeam laser light source 0.

The imaging lens system is telecentric on the object side (the side of the exit surface 0) and the image side (the side of the print surface S). That is, the image-side focal plane of the front lens group 11 matches the object-side focal plane of the rear lens group 12.

The object-side focal plane of the front lens group 11 matches the exit surface 0, and the image-side focal plane of the rear lens group 12 matches the print surface S.

As illustrated in FIGS. 1A and 1C, a laser light beam LI is emitted from an exit end face 01 of the exit surface 0. A laser light beam L2 is emitted from an exit end face 02 that is different from the exit end face 01.

The laser light beam L1 and the laser light beam L2 enter the front lens group 11, intersect with each other at the position of the image-side focal plane of the front lens group 11 (which matches the object-side focal plane of the rear lens group 12) due to the lens effect of the front lens group 11, enter the rear lens group 12, and then focus on the print surface S due to the imaging effect of the rear lens group 12. Specifically, the laser light beam L1 focuses on the print surface S to form an image I1 of the exit end face 01. The laser light beam L2 focuses on the print surface S to form an image 12 of the exit end face 02.

The laser light beam emitted from a micro exit end face is "divergent", and its divergence angle 2θ is defined by the exit numerical aperture NA (=sinθ) that is peculiar to the individual exit end face. The divergence angle is, however, not constant with regard to "all the exit end faces" forming the exit surface 0 and actually has "variation" depending on the exit end face. Hereinafter, the exit-side numerical aperture is referred to as "exit NA", and the numerical aperture of the laser light beam focusing on the print surface S is referred to as "entrance NA".

In the example of the imaging lens system illustrated in FIG. 1A, the imaging magnification is "the same magnification", and the exit NA and the entrance NA are the same as each other with regard to each laser light beam.

As illustrated in FIG. 1A, the laser light beam L1 has a large exit NA, and the light beam emitted from the exit end face 01 has a large divergence angle. Conversely, the laser light beam L2 has a small exit NA, and the light beam emitted from the exit end face 02 has a small divergence angle.

Thus, the entrance NA of the laser light beam L1 on the print surface S is larger than the entrance NA of the laser light beam L2.

FIG. 1B illustrates changes (the upper section in FIG. 1B) in the diameter of the laser light beam L1 and changes (the lower section in FIG. 1B) in the diameter of the laser light beam L2 near the print surface S in FIG. 1A.

Each of the laser light beam L1 and the laser light beam L2 converges from the left side of FIG. 1B to reduce the diameter thereof and obtain the smallest diameter. Then, the laser light beam L1 and the laser light beam L2 diverge toward the right side of FIG. 1B while increasing the diameter thereof. The position where the diameters of the laser light beam L1 and the laser light beam L2 are smallest is the position of the print surface S.

FIG. 1B illustrates a "largest spot diameter BM for proper printing". The optical spot on the print surface of the actual print medium larger than the largest spot diameter BM causes a decrease in the resolution of the image recorded on the print medium.

Therefore, when the print surface S is located within an area where the diameter of the laser light beam is less than the largest spot diameter BM, printing on the print medium is desirable. The range of areas is the above-described "margin of depth".

As illustrated in the upper section of FIG. 1B, the large entrance NA of the laser light beam L1 results in sharp changes in the diameter thereof near the print surface S and a narrow margin of depth D1. Conversely, the relatively small entrance NA of the laser light beam L2 results in gradual changes in the diameter thereof near the print surface S and a wide margin of depth D2.

That is, the margin of depth of the laser light beam that forms an optical spot is inversely proportional to the entrance NA.

In a case where there are variations in the exit NA of a large number of laser light beams emitted from the multibeam laser light source 0, the margin of depth changes depending on the exit NA. For the proper printing on the print medium, the margin of depth is limited to the margin of depth of the laser light beam whose exit NA (and therefore the entrance NA) is largest.

If the exit NA of the laser light beam L1 in FIG. 1A is largest and the exit NA of the laser light beam L2 is smallest, the print surface S is located within the range of the margin of depth D1 of the laser light beam L1 in order to execute the proper printing.

FIGS. 1C and 1D illustrate the laser unit according to the embodiment of the present invention.

The optical system illustrated in FIG. 1C is different from that illustrated in FIG. 1A in that the optical system includes a beam diameter limiter 20.

Specifically, as illustrated in FIG. 1C, the imaging lens system disposed between the multibeam laser light source 0 and the print surface S includes the front lens group 11, the rear lens group 12, and the beam diameter limiter 20.

The beam diameter limiter 20 is provided at the installation position (in the example described, the position of the image-side focal plane of the front lens group 11 (which matches the object-side focal plane of the rear lens group 12) as the exit surface of the multibeam laser light source 0 matches the object-side focal plane of the front lens group 11) where all the laser beams emitted from the multibeam laser light source 0 are focused by the front lens group 11.

The beam diameter limiter 20 includes a passage portion that allows the passage of each laser beam while limiting the diameter of the laser beam including the chief ray.

In the example illustrated in FIG. 1C, the beam diameter limiter 20 includes the "circular passage portion" having the same size as the diameter of the laser light beam L2 at the above-described installation position so as to pass the laser light beam L2 without change and prevent the passage of the part of the laser light beam L1 larger than the passage portion.

Therefore, after the laser light beam L1 passes through the passage portion of the beam diameter limiter 20, the laser light beam L1 has the same diameter as that of the laser light beam L2 and focuses on the print surface S so as to form the image I1 of the exit end face 01.

That is, the rear lens group 12 has the same effect on the laser light beam L1 and the laser light beam L2, and the laser light beam L1 forming the image I1 and the laser light beam L2 forming the image 12 have the same entrance NA.

Thus, as illustrated in FIG. ID, a margin of depth D11 of the laser light beam L1 is identical to a margin of depth D12 of the laser light beam L2.

Specifically, when the diameters of the passing laser light beams emitted from the multibeam laser light source 0 are limited in accordance with the diameter of the laser light beam having the smallest exit NA among all the laser light beams at the position of the beam diameter limiter 20, the entrance NA on the print surface S is identical with regard to all the laser light beams. Thus, it is possible to achieve the widest and the identical margin of depth (the margin of depth D11 (=D12) in FIG. ID) for all the laser light beams.

Various types of beam diameter limiters may be used as long as the beam diameter limiter has the function to prevent "the part of the light beam that is not allowed to pass" from reaching the print surface S. That is, the beam diameter limiter reflects, refracts, or absorbs part of the laser light beam other than the laser light beam to be passed.

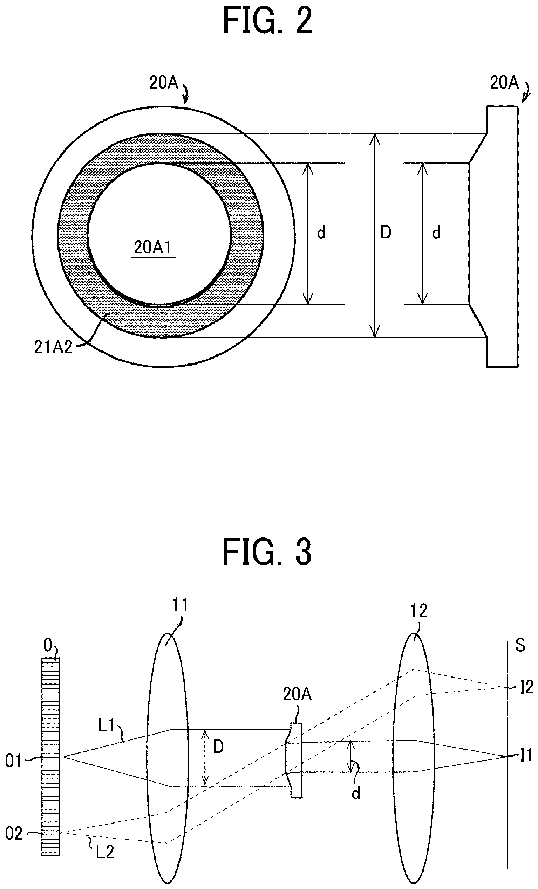

Referring to FIG. 2, an example of a beam diameter limiter 20A is described.

The beam diameter limiter 20A illustrated in FIG. 2 includes a transparent body such as glass and has a truncated cone shape. The beam diameter limiter 20A includes a truncated surface 20A1 and a conical portion 21A2. The truncated surface 20A1 has a diameter d that is set as "the diameter of the laser beam to be passed". The conical portion 21A2 refracts the laser beam.

FIG. 3 illustrates an example in which the beam diameter limiter 20A of FIG. 2 is used as the beam diameter limiter 20 in the example illustrated in FIG. 1C. The truncated surface 20A1 having a truncated cone shape has a circular shape having the diameter d, and the laser light beam passing through this area forms the image (optical spot) I1, the image (optical spot) 12, etc. on the print surface S. The part of the laser light beam incident on the conical portion 21A2 is largely refracted by the conical portion 21A2 so as not to form an image.

The base of the conical portion 21A2 may have a diameter D that corresponds to the diameter of the laser light beam having the largest exit NA among the laser light beams emitted from the multibeam laser light source 0.

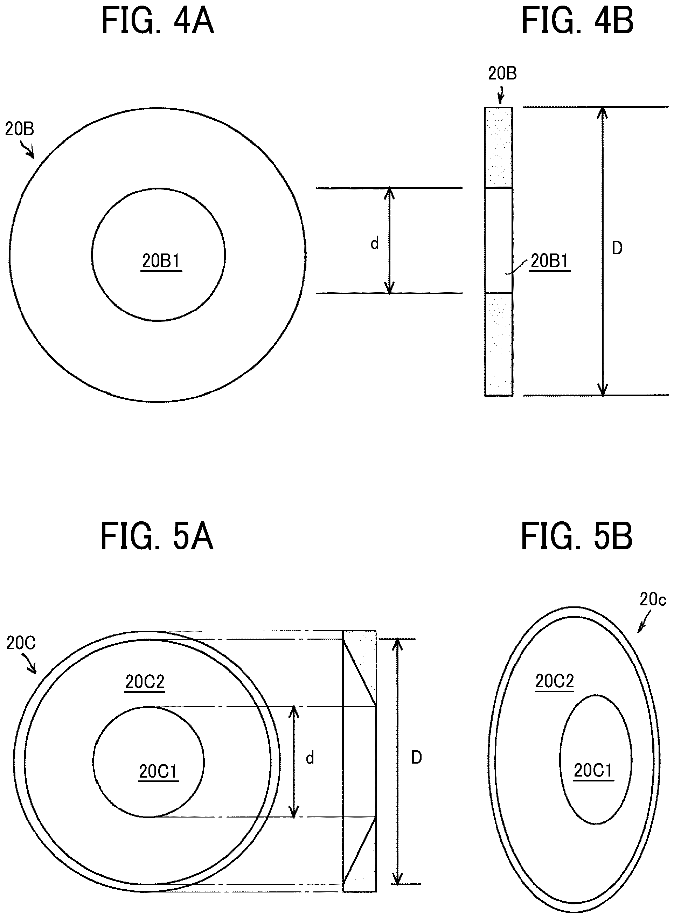

A beam diameter limiter 20B illustrated in FIGS. 4A and 4B has a flat plate shape including a circular peripheral portion and has an "annulus shape" including a circular opening 20B1 at the center. The beam diameter limiter 20B includes a light-shielding material. The beam diameter limiter 20B allows the passage of the laser light beam having a diameter that is less than the diameter d of the circular opening 20B1 and absorbs the laser light incident on the outer side of the circular opening 20B1.

The outer diameter D of the beam diameter limiter 20B is set to be larger than or equal to the diameter of the laser light beam having the largest exit NA among the laser light beams emitted from the multibeam laser light source 0.

As illustrated in FIG. 5A and in the perspective view of FIG. 5B, a beam diameter limiter 20C has a "funnel shape" including a circular peripheral portion. The beam diameter limiter 20C includes a light-shielding material and has an annulus shape including a circular opening 20C1 at the center. The outer portion of the circular opening 20C1 at the center is an open inclined surface 20C2 with the central axis of the circular opening 20C1 as a rotation symmetry axis.

The outer diameter D of the open inclined surface 20C2 of the beam diameter limiter 20C is set to be larger than or equal to the diameter of the laser light beam having the largest exit NA among the laser light beams emitted from the multibeam laser light source 0.

The beam diameter limiter 20A illustrated in FIG. 2, the beam diameter limiter 20B illustrated in FIGS. 4A and 4B, and the beam diameter limiter 20C illustrated in FIGS. 5A and 5B are used in the same manner as the beam diameter limiter 20 described in FIG. 1C.

As the beam diameter limiter 20B illustrated in FIGS. 4A and 4B is "planar", the laser light reflected by a light-shielding portion (the portion outside the circular opening 20B1) returns to the multibeam laser light source 0, which may affect the multibeam laser light source 0 and may cause output instability and damages to the light source. Therefore, in the case of the use of the beam diameter limiter 20B, sufficient "antireflection treatment" is applied to a light-shielding portion at the light source side so that the light beam portion entering this part is absorbed.

On the other hand, the beam diameter limiter 20A illustrated in FIG. 2 and the beam diameter limiter 20C illustrated in FIGS. 5A and 5B include a light-shielding portion that is an inclined surface. In the case of the beam diameter limiter 20A, the conical portion 21A2, which is an inclined portion, refracts the laser light to be blocked. In the case of the beam diameter limiter 20C, the open inclined surface 20C2 reflects the laser beam toward the lens barrel holding the lens system. Thus, it is possible to prevent "the light that is not allowed to pass by the beam diameter limiter" from returning to the multibeam laser light source 0.

In the example described above, the laser light beam having the diameter limited by the beam diameter limiter and passing through the beam diameter limiter matches "the diameter of the laser light beam having the smallest exit NA at the position of the beam diameter limiter". Thus, the entrance NA of all the laser light beams incident on the print surface S are equal so as to achieve the maximum margin of depth.

The diameter of the laser light beam passing through the beam diameter limiter is not limited to this example.

When the multibeam laser light source 0, which is described above as an example, includes the micro exit end faces of the optical fibers coupled to the laser diodes as the "laser light emitters" that are arrayed in one dimension, the exit NA corresponding to the divergence angle of the laser light beam emitted from each optical fiber is not uniform but different. There are various causes for this difference.

A large number of optical fibers constituting the multibeam laser light source 0 are manufactured by using the exit NA corresponding to the specification of the multibeam laser light source 0 as a "standard value", and the differences in the actual exit NA are limited within the narrow range based on the standard value.

Therefore, in such a case, if "the diameter of the laser light beam that passes through the beam diameter limiter" is set based on the standard value of the exit NA, the laser light beam blocked by the beam diameter limiter is the laser light beam emitted from the optical fiber having the exit NA larger than the standard value.

Therefore, the entrance NA on the print surface is less than or equal to the value corresponding to the standard value, and the margin of depth is also "defined with the value corresponding to the standard value as the minimum value". Thus, the imaging lens system (the front lens group, the rear lens group, and the beam diameter limiter) is designed and manufactured in accordance with the standard value of the exit NA for the desired margin of depth so that it is possible to easily obtain the desired margin of depth.

An embodiment of the present invention is described below in detail.

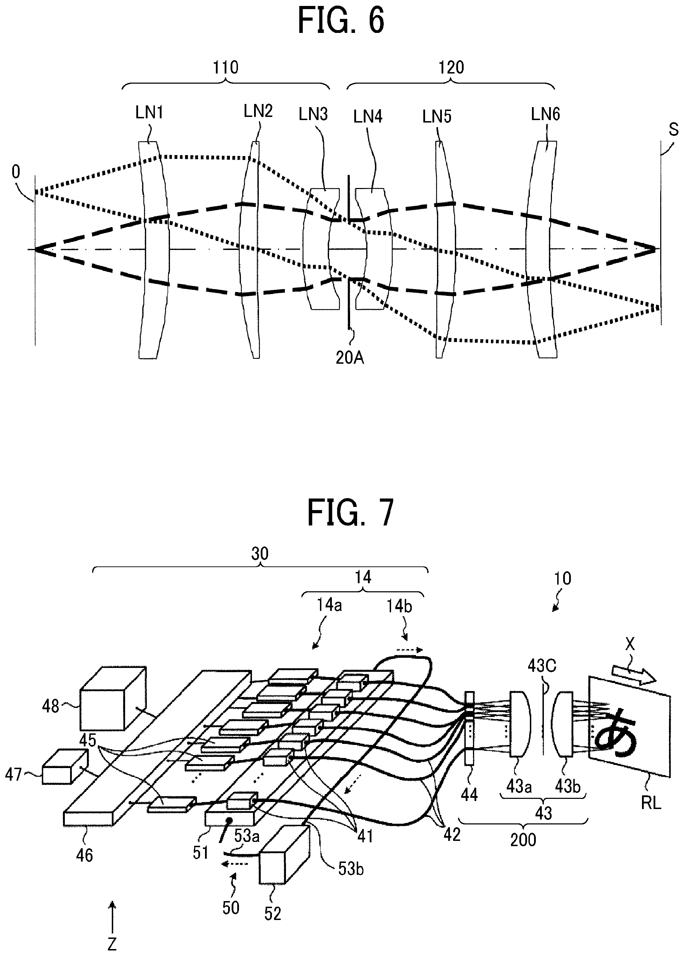

FIG. 6 schematically illustrates a part of an imaging lens system of a "laser unit".

As is the case with FIGS. 1A and 1C, FIG. 6 illustrates (the exit surface of) the multibeam laser light source 0 and the print surface S.

The imaging lens system includes a front lens group 110, a rear lens group 120, and the beam diameter limiter 20A. The front lens group 110, the rear lens group 120, and the beam diameter limiter 20A are held by a lens barrel (not illustrated).

The front lens group 110 and the rear lens group 120 have the same lens configuration. The front lens group 110 and the rear lens group 120 are symmetrically arranged with respect to each other with the image-side focal plane of the front lens group 110 as a symmetry plane. The beam diameter limiter is disposed at the position of the symmetry plane.

Each of the front lens group 110 and the rear lens group 120 includes three meniscus lenses. The front lens group 110 includes, in an order from the object side to the image side, a first meniscus lens LN1 that is positive and has its concave surface facing the object side, a second meniscus lens LN2 that is positive and has its convex surface facing the object side, and a third meniscus lens LN3 that is negative and has its concave surface facing the image side.

The rear lens group 120 includes a sixth meniscus lens LN6, a fifth meniscus lens LN5, and a fourth meniscus lens LN4 that are identical to the first meniscus lens LN1, the second meniscus lens LN2, and the third meniscus lens LN3, respectively, and are arranged from the image side to the object side in the reverse order from the one in the front lens group 110.

As a beam diameter limiter, the beam diameter limiter 20A described above in FIG. 2 is used. FIG. 6 illustrates two laser light beams, the diameter of which is not limited by the beam diameter limiter 20A.

In the multibeam laser light source 0, the micro exit end faces of the optical fibers coupled to the laser diodes are arrayed in one dimension as "laser light emitters".

The multibeam laser light source 0 includes the number (N) of laser diodes, which is equal to the number of scan lines for printing, and N "optical fibers". Each of the optical fibers includes a core portion covered with a cladding layer. One laser diode is disposed on the side of the entrance end face so that the laser light emitted from the laser diode enters the entrance end face and propagates through the optical fiber toward the exit end face. That is, an individual optical fiber is coupled to a laser diode on a one-to-one basis.

The exit end faces of the N optical fibers are closely arrayed in a row, and their positional relationship is set such that all the exit end faces are positioned on the same plane. Each of the "exit end faces of the optical fibers" arrayed as described above is a "laser light emitter", and the combination surface thereof is the "exit face".

The combination of the N optical fibers described above is referred to as "fiber combination array."

Here, Table 1 illustrates the multibeam laser light source combining the fiber combination array and the laser diodes and its optical characteristics.

**[Table 1]**

| | Typical | Min | Max | Unit |
|---|---|---|---|---|
| Fiber core diameter | 105 | 101 | 109 | µm |
| NA | 0.11 | - | 0.15 | - |
| Wavelength | 958 | 948 | 968 | nm |
| Pitch | 127 | 126 | 128 | µm |
| Number of light sources | 192 | - | - | number |
| Maximum light intensity per ch | 10 | | | W |

In Table 1, "fiber core diameter" represents the diameter of the core portion of each optical fiber, "NA" represents the numerical aperture ("exit NA" in the above description), "wavelength" represents the emission wavelength of the laser diode, and "pitch" represents the array pitch of the exit end faces (laser light emitters) of the optical fibers.

"Number of light sources" represents the number of laser diodes.

In Table 1, "typical" represents the "standard value" described above. "Min" and "max" represent the minimum value and the maximum value and, with regard to the fiber core diameter, the smallest diameter and the largest diameter of the core of the optical fiber included in the fiber combination array. "Unit" represents a unit.

As it is understood from Table 1, in this example, the exit NA of the optical fiber used in the configuration of the multibeam laser light source has a standard value of 0.11. The maximum value, higher than a standard value of 0.11, of the exit NA of the optical fiber included in the light source is 0.15. There is no "definite minimum value" for the exit NA lower than the standard value.

"Maximum light intensity per ch" is the maximum light intensity of a laser light emitted from the exit end face (the laser light emitter) of one optical fiber in "the unit of watt".

As it is understood from Table 1, in the present embodiment, 192 laser light emitters are arrayed on the exit surface in one direction, that is, in one dimension, with a pitch of 127 µm on average.

The laser light intensity of each laser diode is independently modulated in accordance with the image information to be printed.

Next, Table 2 illustrates an example of data on the imaging lens system.

**[Table 2]**

| Surface number | Curvature radius | Interval | Lens number | Refraction index nd: dispersion vd |
|---|---|---|---|---|
| 0 | | 42 | | |
| 1 | -99.4190 | 9.200 | LN1 | 2.000690:25.46 |
| 2 | -57.1570 | 26.700 | | |
| 3 | 52.9090 | 7.000 | LN2 | 2.000690:25.46 |
| 4 | 373.2080 | 17.100 | | |
| 5 | 25.6180 | 10.000 | LN3 | 2.000690:25.46 |
| 6 | 16.3060 | 7.300 | | |
| 7 | | 7.300 | | |
| 8 | -16.3060 | 10.000 | LN4 | 2.000690:25.46 |
| 9 | -25.6180 | 17.100 | | |
| 10 | -373.2080 | 7.000 | LN5 | 2.000690:25.46 |
| 11 | -52.9090 | 26.700 | | |
| 12 | 57.1570 | 9.200 | LN6 | 2.000690:25.46 |
| 13 | 99.4190 | 42.464 | | |

In Table 2, "surface number" represents the number of the surface (each of the surfaces of the first meniscus lens LN1 to the sixth meniscus lens LN6 and the print surface S) of the imaging lens system counted from the object surface side, starting from the exit surface 0 as "0th". The surface number 1 is the surface of the first meniscus lens LN1 on the object side. The surface number 7 is the surface of the beam diameter limiter 20A on the entrance side. The surface number 13 is the surface of the sixth meniscus lens LN6 on the image side. As described above, the first meniscus lens LN1 and the sixth meniscus lens LN6, the second meniscus lens LN2 and the fifth meniscus lens LN5, or the third meniscus lens LN3 and the fourth meniscus lens LN4 are lenses that are made of the same material, have the same configuration, and are arranged symmetrically with respect to the surface with the surface number 7. The quantity having a length dimension is represented in the unit of "mm".

The imaging magnification is "the same magnification", and telecentricity exists on the object side and the image side.

The diameter of the "passage portion" of the beam diameter limiter is based on the laser light emitted from the optical fiber having the exit NA that is a standard value of 0.11. The diameter of the laser light emitted from the optical fiber having the exit NA higher than the standard value may be limited.

A laser marker 10 including the above-described laser unit according to a first embodiment of the present invention is described below.

FIG. 7 is a diagram illustrating the laser marker 10 according to the first embodiment.

The laser marker 10 executes multibeam printing by using the laser unit while moving a thermosensitive recording medium RL (having a sheet-like form in this example) in an X-direction.

The laser unit includes a multibeam laser light source, an imaging lens system 43, and a beam diameter limiter 43C.

As schematically illustrated in FIG. 7, the imaging lens system 43 includes a front lens group 43a and a rear lens group 43b to be telecentric on the object side and the image side. In this example, the beam diameter limiter 43C is similar to the above-described beam diameter limiter 20A. The beam diameter limiter 43C is disposed between the front lens group 43a and the rear lens group 43b as described above.

The multibeam laser light source includes a light emitter 14a, a light guide 14b, and a head 44. The light emitter 14a includes: a plurality of laser diodes 41 arrayed in a row; and drivers 45 that are arrayed corresponding to the laser diodes on a one-to-one basis to drive the corresponding laser diode. The light emitter 14a and the light guide 14b constitute a light emitter/light guide 14.

The light guide 14b includes a plurality of optical fibers 42 that are coupled to the laser diodes 41 on a one-to-one basis. The optical fibers constituting the light guide 14b are arrayed in a Z-direction (the direction perpendicular to the surface of the recording medium RL and the X-direction along which the recording medium RL moves) of FIG. 7 and integrated to be the head 44 such that the exit end faces thereof are aligned at a predetermined pitch and the combination surface of the exit end surfaces forms a common flat surface. The common flat surface is an example of the above-described exit surface 0 and hereinafter referred to as "object surface of the head 44".

The head 44 is disposed such that the object surface thereof is opposed to the imaging lens system 43.

A power supply unit 48 supplies the electric power to a controller 46 and the driver 45.

The information on the print image to be printed on the recording medium RL is output from an image information output unit 47, such as a microcomputer, to drive each of the laser diodes and control the emission of a laser light via the controller 46 and the driver 45.

The corresponding laser diode 41 emits light in accordance with the image information so as to emit the laser light. The emitted laser light is coupled to the optical fiber corresponding to the laser diode, is guided to the exit end side of the optical fiber, and is emitted as a laser light beam from the object surface of the head 44 so as to form the optical spot on the surface of the recording medium RL by the imaging lens system 43. Due to the effect of the beam diameter limiter 43C, the margin of depth is increased for the laser light beam forming the optical spot. Thus, the "allowable defocus" on the print surface, which is the surface of the recording medium RL, is increased, whereby stable printing may be achieved.

FIG. 7 illustrates an optical unit 200. In the optical unit 200, the surface of the head 44 at the side of the imaging lens system 43 and the surface of the recording medium RL correspond to the exit surface 0 and the print surface S, respectively, in FIG. 6. The imaging lens system 43 and the beam diameter limiter 43C correspond to the imaging lens system and the beam diameter limiter 20A, respectively, in FIG. 6.

FIG. 7 illustrates a cooling unit 50. The cooling unit 50 includes a heat receiver 51 that receives heat from the laser diodes 41, a heat dissipator 52, and cooling pipes 53a and 53b. The heat dissipator 52 includes a pump and a radiator.

The pump causes the coolant to flow into the heat receiver 51 via the cooling pipe 53a to cool the heat receiver 51 and then transfers the heat to the radiator of the heat dissipator 52 via the cooling pipe 53b so as to release the heat to the outside. This prevents an increase in the temperature of the laser diodes 41.

FIG. 7 illustrates a main body 30 including the light emitter/light guide 14, the cooling unit 50, the controller 46, the power supply unit 48, the image information output unit 47, etc.

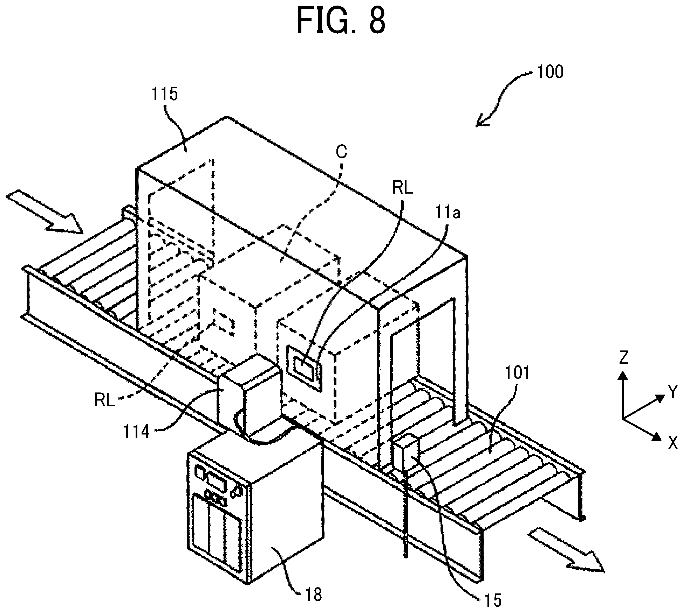

Referring to FIG. 8, a laser printing system 100 using a laser marker 114 described in FIG. 7 according to the first embodiment is described below.

The laser printing system 100 includes a system that executes printing on the label RL attached to a container C. The thermosensitive recording medium RL described in FIG. 7 is configured as a "label" and, as there may be no confusion, the same reference numeral as that used for the recording medium RL in FIG. 7 is used for the label RL.

The container C with the label RL attached thereto is conveyed in the X-direction of FIG. 8 by a conveyor device 101. The laser marker 114, which is configured as described in FIG. 7, is fixedly provided at a specific position and is controlled by a system control device 18.

A shielding cover 115 is fixedly provided at the area opposed to the laser marker 114 in the Y-direction of FIG. 8 so that the container C is passed through the inside of the shielding cover 115 and conveyed by the conveyor device 101 in the X-direction. The shielding cover 115 includes a window 11a that is disposed at the position opposed to the laser marker 114 in the Y-direction. When the label RL attached to the container C, conveyed by the conveyor device 101 in the X-direction, passes through the window 11a, the laser marker 114 executes printing.

The printed image such as a bar code is read by a reading device 15 (located at a fixed position) so as to check whether the printing has been properly executed by the laser marker 114.

The laser marker 114 using the above-described laser unit enables a large margin for defocus on the label RL, which is a print surface, and stable printing with a large margin of depth.

Although the embodiments of the present invention have been described above, the present invention is not limited to the specific embodiments described above, and various modifications and changes may be made within the spirit of the present invention described in claims unless specified in particular in the above description.

For example, although the multibeam laser light source including the laser light emitters having a one-dimensional array is described above, it is obviously possible to use a multibeam laser light source including laser light emitters arrayed in two dimensions.

The advantages described in the embodiments of the present invention are merely desirable advantages produced from the present invention, and the advantages of the present invention are not limited to the advantages described in the embodiments.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

## Claims

1. A laser unit comprising:
a multibeam laser light source (0) including a plurality of micro laser light emitters arrayed in a one-dimensional array or a two-dimensional manner; and
an imaging lens system (43) configured to form real images of the plurality of micro laser light emitters arrayed of the multibeam laser light source (0), the imaging lens system (43) being telecentric on an object side and an image side, the image lens system (43) including:
a front lens group disposed on the object side;
a rear lens group disposed on the image side; and
a beam diameter limiter that is disposed at a position onto which all laser beams from the multibeam laser light source (0) are focused by the front lens group,
wherein the beam diameter has a passage portion allowing passage of part of each laser beam including a chief ray, and limits a diameter of a passing laser beam passing through the passage portion so as to increase a margin of depth for imaging with the passing laser beam.

2. The laser unit according to claim 1, wherein
the plurality of micro laser light emitters of the multibeam laser light source (0) are located at a position of an object-side focal plane of the front lens group,
the beam diameter limiter is located at a position of an image-side focal plane of the front lens group, and
the rear lens group has an object-side focal plane that agrees with the beam diameter limiter in position.

3. The laser unit according to claim 1 or 2, wherein the beam diameter limiter performs at least one of reflection, refraction, and absorption of a laser beam other than a laser beam allowed to pass.

4. The laser unit according to claim 3, wherein
the beam diameter limiter includes a convex or concave transparent body having a truncated cone shape including a truncated surface and a conical portion,
a diameter of the truncated surface is set as a diameter of the laser beam allowed to pass, and
the conical portion refracts a laser beam.

5. The laser unit according to claim 3, wherein
the beam diameter limiter is in a form of one of a flat plate and a funnel each having a circular peripheral portion, and has an annulus shape including a circular opening at a center, and
a diameter of the circular opening is set as a diameter of the laser beam allowed to pass.

6. The laser unit according to claim 5, wherein the beam diameter limiter having the annulus shape includes an outer portion around the circular opening at the center, the outer portion including an open inclined surface with a central axis of the circular opening as a rotation symmetry axis, and the open inclined surface including a reflective surface.

7. The laser unit according to any one of claims 1 to 6, wherein
the front lens group and the rear lens group have an identical lens configuration,
the front lens group and the rear lens group are arranged symmetrically with respect to an image-side focal plane of the front lens group as a symmetry plane, and
the beam diameter limiter is disposed at a position of the image-side focal plane.

8. The laser unit according to claim 7, wherein
each of the front lens group and the rear lens group includes three meniscus lenses, the three meniscus lenses included in the front lens group are a first meniscus lens that is positive and has a concave surface facing the object side, a second meniscus lens that is positive and has a convex surface facing the object side, and a third meniscus lens that is negative and has a concave surface facing the image side, which are sequentially arranged in a direction from the object side toward the image side, and
the three meniscus lenses included in the rear lens group are identical to the first meniscus lens, the second meniscus lens, and the third meniscus lens, respectively, and are sequentially arranged in the direction from the object side toward the image side but in an order reverse to an order in the front lens group.

9. The laser unit according to any one of claims 1 to 8, wherein the multibeam laser light source (0) includes a plurality of exit end faces of optical fibers coupled to laser diodes, the plurality of exit end faces serving as the plurality of micro laser light emitters arrayed in a one-dimensional or two-dimensional manner.

10. A laser marker comprising the laser unit according to any one of claims 1 to 9.

11. A laser printing system comprising the laser marker according to claim 10 to execute printing.
